# EUROPÄISCHE PATENTANMELDUNG

(11) **EP 1 103 785 A1**
(43) Veröffentlichungstag der Anmeldung: **30.05.2001**
(21) Anmeldenummer: 99123608.4
(22) Anmeldetag: 26.11.1999
(51) Int. Cl.: G01B 11/16, G01B 11/24, G01B 9/02, G01M 17/02

(54) **Verfahren und Vorrichtung zur Ermittlung von Formveränderungen an torusförmigen Prüfobjekten**

(71) Anmelder: NOVA C.O.R.D. AG, 9494 Schaan (LI)
(72) Erfinder: Rottenkolber, Hans, Dr., 83123 Amerang (DE)
(74) Vertreter: Hano, Christian, Dipl.-Ing.

(57) **Zusammenfassung**

Bei dem Verfahren zur Ermittlung von Formveränderungen an torusförmigen Prüfobjekten, vorzugsweise an Luftreifen wird das Prüfobjekt mit kohärentem Licht beleuchtet. Die bei zwei Verformungszuständen des Prüfobjekts vom Prüfobjekt zurückgestreute Strahlung wird jeweils in einem Interferometer in zwei Teilstrahlen aufgeteilt, die zueinander versetzt sind, wobei ein Teilstrahl in Phasenschritten gegenüber dem anderen Teilstrahl phasenverschoben wird. Die beiden Teilstrahlen werden mit Hilfe abbildender optischer Komponenten auf einem Bildsensorsystem abgebildet und die durch die Abbildung auf dem Bildsensorsystem erzeugten Signale werden digitalisiert. Die digitalisierten Signale der Phasenschritte beider Verformungszustände des Prüfobjekts werden anschließend in einem Bildverarbeitungsystem zu einem Modulo-2Pi-Bild verarbeitet. Um Formveränderungen an torusförmigen Prüfobjekten in einem einzigen Prüftakt möglichst störungsfrei ermitteln zu können, wird das Prüfobjekt koaxial ringförmig beleuchtet und zur Versetzung der Teilstrahlen zueinander ein Teilstrahl bezüglich des anderen Teilstrahls auf einer Kreisbahn verschoben. Das Modulo-2Pi-Bild wird direkt optisch gefiltert und das gefilterte Modulo-2Pi-Bild so aufbereitet, das eine Formänderungsgröße ermittelt wird, die mit einem vorgegebenen Schwellwert verglichen wird.

## Beschreibung

Die Erfindung betrifft ein Verfahren sowie eine Vorrichtung zur Ermittlung von Formveränderungen an torusförmigen Prüfobjekten, vorzugsweise an Luftreifen, nach dem Oberbegriff des Patentanspruchs 1 beziehungsweise 7.

Ein gattungsgemäßes Verfahren sowie eine gattungsgemäße Vorrichtung sind aus der DE 42 31 578 C2 bekannt. Bei dem bekannten Verfahren wird der Umfang eines Reifens in mehrere Prüfabschnitte unterteilt und jeder Abschnitt des Reifens einzeln auf Formveränderungen überprüft. Der jeweilige Prüfabschnitt wird mit einer Beleuchtungseinrichtung beleuchtet, die mehr als eine Laserdiode aufweist. Das von dem Prüfobjekt zurückgestreute Licht durchläuft ein Michelson-Interferometer. Eine abbildende Optik erstellt ein Bild von der Oberfläche des Prüfabschnitts auf einem Sensorsystem, das typischerweise in einer CCD-Kamera eingebaut ist. Die von der CCD-Kamera aufgenommenen Video-Signale werden über einen A/D-Wandler einem Rechner zur weiteren Verarbeitung zugeführt. Das Michelson-Interferometer umfaßt einen Strahlteiler und zwei Planspiegel. Aufgrund dieser Ausbildung des Michelson-Interferometers kann nur ein kartesisches Shearing in x oder y - Richtung durchgeführt werden, so daß nur eine näherungsweise Prüfung eines torusförmigen Prüfobjekts möglich ist.

In der DE 195 01 073 A1 wird ein spezielles Bildverarbeitungs-Verfahren beschrieben. Bei diesem Verfahren wird das erhaltene Modulo-2Pi-Bild, durch welches die Verformung dargestellt wird, zu einem Ausgangs-Grauwert-Bild weiterverarbeitet, indem es verstetigt oder demoduliert wird (vergleiche Osten W. "Digitale Verarbeitung und Auswertung von Interferenzbildern", Akademie-Verlag, Berlin, 1991). Da bei der Verstetigung des Modulo-2Pi-Bildes der einer Erscheinung ohne Verformung entsprechende "Basis"-Grauwert willkürlich, das heißt einmal heller, einmal dunkler ist und daher ein Schwellwert zur Erkennung von Defekten nicht möglich ist, wird bei dem aus der DE 195 01 073 A1 bekannten Verfahren eine weitere Bildbearbeitung vorgenommen. Dabei wird das Grauwertbild "differenziert", d.h. es wird ein zweites Grauwertbild generiert, welches gegen das ursprüngliche Grauwertbild örtlich verschoben wird. Beide Grauwertbilder werden voneinander abgezogen. Dadurch wird der willkürliche "Basis"-Grauwert eliminiert. Zur Erkennung der fehlertypischen Verformung ist eine Richtungsdiskrimination notwendig, d.h. man muß eine Delle von einer Beule unterscheiden können. Dies wird durch eine zusätzliche Verschiebung des zweiten Grauwertbildes in Richtung der Grauwertachse erreicht. Dieses Verfahren setzt allerdings voraus, daß Delle und Beule ungefähr von derselben Größenordnung sind. Diese Bedingung ist häufig nicht gegeben. Zur Lösung dieses Problems wird in der EP 0 955 533 A2 vorgeschlagen, den "Basis"-Grauwert auf einen mittleren Grauwert anzuheben, damit auch stark unterschiedliche Verformungserscheinungen als Delle oder Beule identifiziert werden können.

Bei all den beschriebenen bekannten Verfahren wird der Reifenumfang in mehrere Prüfabschnitte, typischerweise 6 bis 20, unterteilt und jeder einzelne Prüfabschnitt geprüft. Darüberhinaus wird das erhaltene Modulo-2Pi-Bild jeweils zu einem Ausgangsgrauwertbild verstetigt. Die bekannten Prüfverfahren sind daher sehr aufwendig.

Der Erfindung liegt die Aufabe zugrunde, ein Verfahren sowie eine Vorrichtung zu schaffen, durch die es ermöglicht wird, Formveränderungen an torusförmigen Prüfobjekten in einem einzigen Prüftakt möglichst störungsfrei zu ermitteln.

Diese Aufgabe wird durch ein Verfahren mit den Merkmalen des Patentanspruchs 1 gelöst. Vorteilhafte Ausführungsarten des erfindungsgemäßen Verfahrens sind Gegenstand der Patentansprüche 2 bis 6.

Die Erfindung wird außerdem durch eine Vorrichtung mit den Merkmalen des Patentanspruchs 7 gelöst, die in den Patentansprüchen 8 bis 11 vorteilhaft weitergebildet ist.

Erfindungsgemäß wird der gesamte Prüfbereich des Prüfobjekts koaxial ringförmig beleuchtet und ein Shearing in Umfangsrichtung durchgeführt. Hierdurch wird es ermöglicht, Formveränderungen an dem Prüfobjekt in einem einzigen Prüftakt zu ermitteln. Im Gegensatz zu den bekannten Verfahren wird das Modulo-2Pi-Bild nicht zu einem Grauwertbild demoduliert, sondern direkt optisch gefiltert, wodurch das Prüfverfahren vereinfacht wird.

Beste Ergebnisse zeigen sich, wenn das Prüfobjekt zwischen den beiden Verformungszuständen so gering verformt wird, daß sich Stellen der Prüffläche des Prüfobjekts bei der Verformung weniger als eine Wellenlänge des kohärenten Lichts bewegen. Hierdurch wird der Rechenaufwand deutlich verringert. Bei einem Luftreifen kann die geringe Verformung durch geringe Druckabsenkung in einer Größenordung von ca. 3 mbar erreicht werden.

Wenn das gefilterte Modulo-2Pi-Bild in einer Rechenrichtung verarbeitet wird, kann auf einfache Weise unterschieden werden, ob eine Formveränderung eine Beule oder eine Delle ist. Entscheidungskriterium ist, ob bei der Verarbeitung in der einen Rechenrichtung zunächst ein Minimum oder ein Maximum ermittelt wird.

Zur Ermittlung der Formänderungsgröße kann das gefilterte Modulo-2Pi-Bild differenziert werden. Es ist jedoch auch möglich, zur Ermittlung der Formänderungsgröße die Differenz zwischen Maximum und Minimum in einem Bereich des gefilterten Modulo-2Pi-Bildes zu bilden, der einem Bereich eines Umfangssegmentes des Prüfobjekts entspricht, dessen Breite wenigstens doppelt so groß ist, wie die Versetzung der Teilstrahlen zueinander bezogen auf das Prüfobjekt. In der zuletzt genannten Vorgehensweise stellt die Differenz den Schwellwert im Sinne der Fehlererkennung dar.

Defekte können auch von ungeschultem Bedienungspersonal leicht erkannt werden, wenn die ermittelte Formänderungsgröße mit einem Schwellwert verglichen wird und bei Überschreiten des Schwellwertes eine Falschfarbendarstellung oder ein auffälliges Signal erzeugt wird.

Um eine Prüfung des gesamten Prüfbereichs in einem Prüftakt zu ermöglichen, weist die erfindungsgemäße Vorrichtung eine Beleuchtungseinheit auf, die so ausgebildet ist, daß das Prüfobjekt koaxial ringförmig mit kohärentem Licht beleuchtet wird. Die Beleuchtungseinrichtung kann ein diffraktives Element, eine verspiegelte Kegelplatte oder ein Axikon (axial durchstrahlter Glaskegel) umfassen, die kohärentes Licht von einer Laserdiode ringförmig auf dem Prüfobjekt abbilden.

Um ein Shearing in Umfangsrichtung zu ermöglichen, wird die Strahlversetzungseinrichtung vorzugsweise von einem um die Drehachse des Prüfobjektes oder senkrecht zu dieser Drehachse drehbaren Dachkantprisma oder Dove-Prisma gebildet.

Die Strahlversetzungseinrichtung kann jedoch auch wenigstens eine vor einem Planspiegel angeordnete Keilplatte umfassen und um die Drehachse des Prüfobjekts oder senkrecht zu dieser Drehachse drehbar sein.

Zur Einstellung der Breite der ringförmigen Beleuchtung auf das Prüfobjekt kann die Beleuchtungseinrichtung eine entsprechende Einstelleinrichtung umfassen.

Als Zweistrahl-Interferometer kann beispielsweise ein Interferometer vom Typ Michelson oder Mach-Zehnder verwendet werden.

Ein Ausführungsbeispiel der Erfindung wird nachstehend anhand von Zeichnungen näher erläutert. Es zeigt:
- Fig. 1: schematisch den Aufbau einer Beleuchtungseinrichtung zur Beleuchtung eines Luftreifens;
- Fig. 2: schematisch den Aufbau eines Prüfkopfes zur Ermittlung von Formveränderungen von torusförmiqen Prüfobiekten;
- Fig. 3: den typischen Verlauf einer Verformung im Bereich einer Beule;
- Fig. 4: den Intensitätsverlauf in einem gefilterten Modulo-2Pi-Bild des Bereichs der Beule von Fig. 3;
- Fig. 5: den typischen Verlauf einer Verformung im Bereich einer Delle:
- Fig. 6: den Intensitätsverlauf in einem gefilterten Modulo-2Pi-Bild des Bereichs der Delle von Fig. 5.

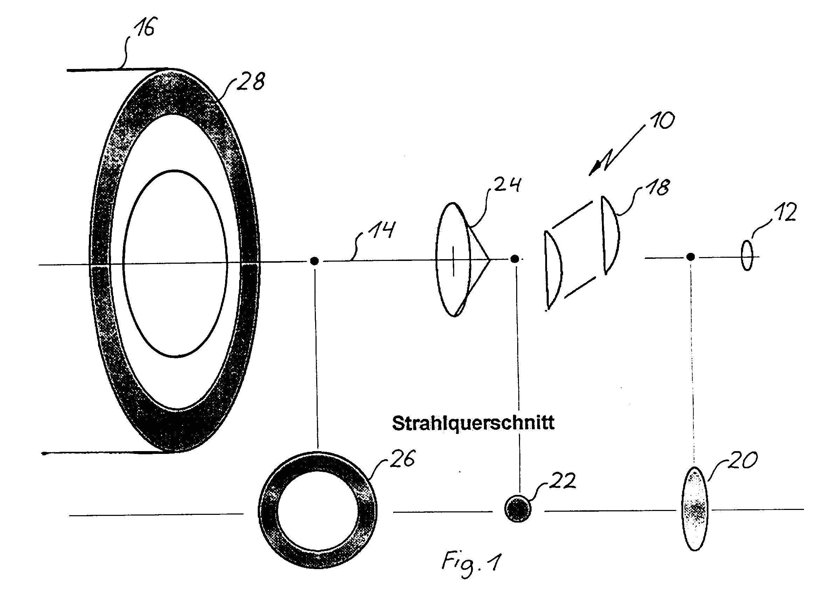

Die in Fig. 1 gezeigte Beleuchtungseinrichtung 10 weist eine single-modige Laserdiode 12 mit einem Wellenbereich von ca. 800 nm und einer Leistung von ca. 100 mW auf, die auf der Mittelachse 14 eines Luftreifens 16 im Abstand zum Luftreifen 16 angeordnet ist. Vor der Laserdiode 12 ist auf der Mittelachse 14 in aller Regel eine Zylinderlinse 18 oder eine ähnlich arbeitende Linse angeordnet. Der aus einer Laserdiode 12 austretende Lichtstrahl hat typischerweise einen elliptischen Querschnitt. Der Öffnungswinkel beträgt typischerweise auf der kleinen Ellipsenachse 7° bis 12°, auf der großen Ellipsenachse 12° bis 35°. Mit der Zylinderlinse 18 kann der elliptische Strahlquerschnitt 20 näherungsweise in einen konzentrischen Strahlquerschnitt 22 umgewandelt werden. Der aus der Laserdiode 12 austretende Strahl 20 hat, von der Art der Laserdiode abhängig, stark unterschiedliche Formen. Deshalb können auch andere Linsen oder Kombinationen von Linsen zur Erstellung des notwendigen konzentrischen Strahlquerschnitts vorteihaft sein. Zwischen der Zylinderlinse 18 und dem Luftreifen 16 ist ein Axikon 24, das heißt ein rotationssymmetisches Kegelprisma, koaxial auf der Mittelachse 14 so angeordnet, daß seine Spitze der Zylinderlinse 18 zugewandt ist. Das Axikon 24 wandelt den aus der Zylinderlinse 18 austretenden Strahlkegel 22 in einen Strahl 26 mit ringförmigem Querschnitt um. Die Anordnung der einzelnen Komponenten ist so gewählt, daß der Luftreifen 16 koaxial ringförmig im Übergangsbereich zwischen Gürtelpaket und Karkasse beleuchtet wird, wobei der Ring 28 vorzugsweise eine Breite in der Größenordnung zwischen 10 und 20 mm hat.

Bei der beschriebenen Beleuchtungseinrichtung 10 sind die Laserdiode 12, die Zylinderlinse 18 sowie das Axikon 24 auf der Mittelachse des Luftreifens 16 angeordnet. Falls eine solche Anordnung aus konstruktionsbedingten Gründen nicht möglich ist, ist es auch möglich, diese Komponenten auf einer im Winkel zur Mittelachse 14 verlaufenden Geraden anzuordnen. Zur Einstellung der Ringbreite kann zusätzlich eine Einstelleinrichtung (nicht gezeigt) vorgesehen sein.

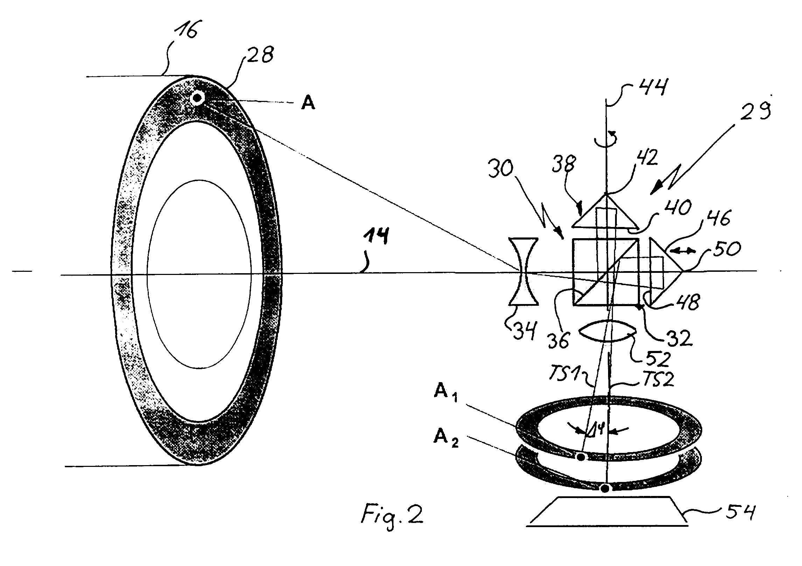

Der in Fig. 2 gezeigte Prüfkopf 29 weist ein Interferometer 30 auf, das einen hinter einer Optik 34 angeordneten Strahlteiler 32 umfaßt. Die strahlteilende Fläche 36 des Strahlteilers 32 ist im Winkel von 45° zur Mittelachse 14 angeordnet, wobei die Mittelachse 14 durch den Mittelpunkt der strahlteilenden Fläche 36 hindurchgeht. In Fig. 2 ist oberhalb des Strahlteilers 32 ein erstes Dachkantprisma 38 angeordnet. Die Basis 40 des ersten Dachkantprismas 38 verläuft parallel zur Mittelachse 14. Der Mittelpunkt der Firstkante 42 liegt auf einer Geraden 44, die senkrecht zur Mittelachse 14 durch den Mittelpunkt der strahlteilenden Fläche 36 verläuft. Das Dachkantprisma 38 ist um die Gerade 44 verschwenkbar angeordnet. Ein weiters Dachkantprisma 46 ist auf der der Optik 34 abgewandten Seite des Strahlteilers 32 so angeordnet, daß ihre Basis 48 senkrecht zur Mittelachse 14 verläuft und der Mittelpunkt der Firstkante 50 auf der Mittelachse 14 angeordnet ist. Die Ebenen der Basen 40 und 48 sind zueinander senkrecht und schneiden die Ebene der strahlteilenden Fläche 36 in einem Winkel von 45°.

Das zweite Dachkantprisma 46 ist mit einem Piezotranslator verbunden, durch den das zweite Dachkantprisma 46 sehr genau entlang der Mittelachse 14 verschoben werden kann.

An der unteren Austrittsseite des Interferometers 30 ist ein Objektiv 52 einer CCD-Kamera angeordnet. Unterhalb des Objektivs 52 weist die CCD-Kamera als Bildsensorsystem einen CCD-Chip 54 auf.

Das erste Dachkantprisma 38 ist um die Gerade 44 leicht verdreht.

Wie es Fig. 2 zeigt, wird ein Strahl eines Punktes A im beleuchteten Ring 28 des Prüfbereichs des Luftreifens 16 durch das Objektiv 34 auf die strahlteilende Fläche 36 des Strahlteilers 32 umgelenkt. Ein Teilstrahl TS1 geht durch die strahlteilende Fläche 36 hindurch, wird von dem zweiten Dachkantprisma 46 auf die Rückseite der strahlteilenden Fläche 36 reflektiert und von dort in Richtung des Objektivs 52 reflektiert.

Eine zweite Teilstrahlung TS2 wird von der strahlteilenden Fläche 36 in Richtung des verdrehten ersten Dachkantprismas 38 reflektiert. Die von dem Dachkantprisma 38 reflektierte Teilstrahlung TS2 tritt durch die strahlteilende Fläche 36 hindurch und trifft ebenfalls auf das Objektiv 52 der CCD-Kamera.

Mit den abbildenden Komponenten wird der Prüfbereich 28 des Prüfobjekts typischerweise auf einem CCD-Chip 54 abgebildet. Zum besseren Verständnis des Shearing in Umfangsrichtung sind die im Interferometer erzeugten Teilbilder A1 und A2 nach oben versetzt gezeigt.

Die Teilstrahlung TS1 des Punktes A trifft auf dem CCD-Chip an einem Punkt A1 auf, während die Teilstrahlung TS2 in einem Punkt A2 auftrifft. Der Punkt A2 ist bezüglich des Punktes A1 auf einer Kreisbahn in einem Winkelabstand Δϕ versetzt, deren Mittelachse von der Geraden 44 gebildet wird. Ursache hierfür ist die Verdrehung des ersten Dachkantprismas 38 um die Gerade 44. Auf diese Weise wird auf dem CCD-Chip 54 ein Rotationsshearingbild erzeugt. Die Verdrehung des Dachkantprismas 38 ist so gewählt, daß zwei Punkte in dem beleuchteten Ring 28, die sich in einem Abstand von ungefähr 7 mm auf einer koaxial zur Mittelachse 14 angeordneten Kreisbahn befinden, übereinander auf dem CCD-Chip 54 abgebildet werden.

Zur Ermittlung von Formveränderungen an dem Luftreifen wird in einem ersten unverformten Zustand des Luftreifens das zweite Dachkantprisma 46 mittels des Piezoantriebs viermal so verschoben, daß sich die Phase der von dem Dachkantprisma 46 reflektierten Teilstrahlung TS1 jeweils um π/2 (1/4 der Wellenlänge) verschiebt, so daß jeweils um π/2 phasenverschobene Bilder auf dem CCD-Chip 54 erzeugt werden. Anschließend wird der Druck des Luftreifens 16 um ca. 3 mbar verringert und das Dachkantprisma 46 wiederum viermal so verschoben, dass die Teilstrahlung TS1 jeweils um π/2 phasenverschoben wird.

Die auf dem CCD-Chip während der zwei Verformungszustände abgebildeten Bilder werden jeweils über einen A/D-Wandler einer Bildverarbeitungseinheit zugeführt und auf bekannte Weise zu einem Modulo-2Pi-Bild weiterverarbeitet (vergleiche Osten W. "Digitale Verarbeitung und Auswertung von Interferenzbildern", Akademie-Verlag, Berlin, 1991). Die Absenkung des Drucks in dem Luftreifen 16 ist so gering gewählt, daß sich Stellen der Prüffläche des Luftreifens 16 bei der Verformung weniger als eine Wellenlänge des kohärenten Lichts bewegen, also die Phasendifferenz kleiner als 2II ist. In diesem Fall ist keine Demodulation des Modulo-2Pi-Bildes erforderlich. Es genügt, das Modulo-2Pi-Bild auf geeignete Weise zu filtern. Der "Basis"-Grauwert, d.h. die "Null" ist bei einem Modulo-2Pi-Bild immer gegeben. Aufgrund des Rechenmodus für das Modulo-2Pi-Bild (ArcTan-Funktion = Sägezahnverlauf) ist das Signal ausgeprägter als im Falle einer Demodulation zu einem Grauwertbild.

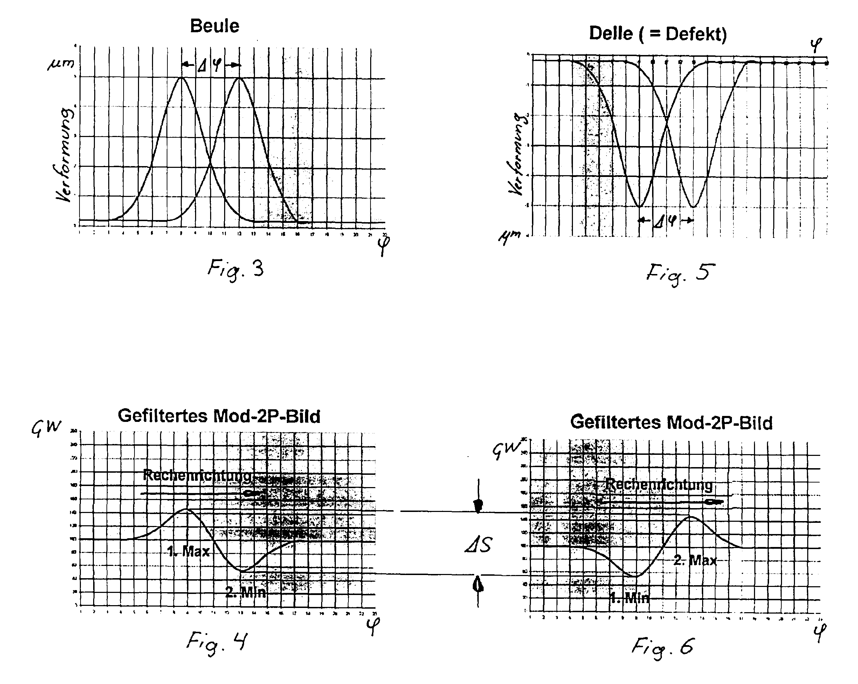

Fig. 3 zeigt den typischen Verlauf einer Verformung im Bereich einer Beule, wobei als Abszisse der Winkel ϕ des beleuchteten Rings 28 des Prüfbereiches des Luftreifens 16 und als Ordinate die Verformung in *µ*m angegeben ist. Die zweite rechte Kurve zeigt ebenfalls den Verlauf der Verformung, ist aber um den Shearingbetrag Δϕ gegen die ursprüngliche Verformungskurve versetzt.

Fig. 4 zeigt den Intensitätsverlauf eines direkt gefilterten Modulo-2Pi-Bildes im Bereich der Beule, wobei als Ordinate der Grauwert angegeben ist. Wie zu erkennen ist, hat das gefilterte Modulo-2Pi-Bild im Bereich der Beule einen annähernd sinusförmigen Verlauf, wobei die Grauwerte zunächst auf ein Maximum ansteigen und anschließend auf ein Minimum abfallen.

Fig. 5 zeigt den typischen Verlauf einer Verformung im Bereich einer Delle, wobei als Abszisse der Winkel ϕ des beleuchteten Rings 28 des Prüfbereiches des Luftreifens 16 und als Ordinate die Verformung in *µ*m angegeben ist. Fig. 6 zeigt den Intensitätsverlauf eines direkt gefilterten Modulo-2Pi-Bildes im Bereich der Delle, wobei als Ordinate der Grauwert angegeben ist. Es ist zu erkennen, daß das gefilterte Modulo-2Pi-Bild ebenfalls einen annähernd sinusförmigen Verlauf hat, wobei die Kurve zunächst auf ein Minimum abfällt und anschließend auf ein Maximum ansteigt.

Es ist daher möglich, durch Verarbeitung des gefilterten Modulo-2Pi-Bildes in einer Rechenrichtung zu unterscheiden, ob eine Formveränderung in dem Luftreifen 16 eine Beule oder eine Delle ist, je nachdem ob man bei der Verarbeitung in einer Rechenrichtung zuerst auf ein Maximum oder ein Minimum trifft. Eine Delle stellt einen Reifendefekt dar, eine Beule nicht.

Zur Festlegung einer relevanten Formänderungsgröße wird das gefilterte Modulo-2Pi-Bild in kleinen Segmenten von einer Breite von ca. zwei Shearingabständen abgetastet. Die Differenz ΔS zwischen Maximum und Minimum innerhalb dieses kleinen Rechensegments wird als Schwellwert definiert und stellt ein Kriterium für einen Reifendefekt dar. Wenn bei einer Verarbeitung des gefilterten Modulo-2Pi-Bildes festgestellt wird, daß eine Delle vorhanden ist und die Differenz ΔS zwischen Minimum und Maximum in einem Rechensegment einen vorherbestimmten Schwellenwert (z.B. 50 Grauwerte) überschreitet, wird ein Defekt erkannt. Die Anzeige des Defektes kann durch eine Falschfarbendarstellung oder ein anderes auffälliges Signal, wie zum Beispiel ein Warnton oder ein Warnlicht erfolgen.

## Patentansprüche

1. Verfahren zur Ermittlung von Formveränderungen an torusförmigen Prüfobjekten, vorzugsweise an Luftreifen, bei dem - das Prüfobjekt mit kohärentem Licht beleuchtet wird,
- die bei zwei Verformungszuständen des Prüfobjektsvom Prüfobjekt zurückgestreute Strahlung jeweils in einem Interferometer in zwei Teilstrahlen aufgeteilt wird, die zueinander versetzt sind, wobei ein Teilstrahl in Phasenschritten gegenüber dem anderen Teilstrahl phasenverschoben wird,
- die beiden Teilstrahlen mit Hilfe abbildender optischer Komponenten auf einem Bildsensorsystem abgebildet werden,
- die durch die Abbildung auf dem Bildsensorsystem erzeugten Signale digitalisiert werden,
- die digitalisierten Signale der Phasenschritte beider Verformungszustände des Prüfobjekts in einem Bildverarbeitungsystem zu einem Modulo-2Pi-Bild verarbeitet werden,
dadurch gekennzeichnet, daß
- das Prüfobjekt koaxial ringförmig beleuchtet wird,
- zur Versetzung der Teilstrahlen zueinander ein Teilstrahl bezüglich des anderen Teilstrahls auf einer Kreisbahn verschoben wird,
- das Modulo-2Pi-Bild direkt optisch gefiltert wird,
- das gefilterte Modulo-2Pi-Bild so aufbereitet wird, dass eine Formänderungsgröße ermittelt wird, die mit einem vorgegebenen Schwellwert verglichen wird.

2. Verfahren nach Anspruch 1, dadurch gekennzeichnet, daß das Prüfobjekt zwischen den beiden Verformungszuständen so gering verformt wird, daß sich Stellen der Prüffläche des Prüfobjekts bei der Verformung weniger als eine Wellenlänge des kohärenten Lichts bewegen.

3. Verfahren nach einem der vorhergehenden Ansprüche dadurch gekennzeichnet, daß zur Unterscheidung, ob eine Formveränderung eine Beule oder Delle ist, das gefilterte Modulo-2Pi-Bild in einer Rechenrichtung verarbeitet wird.

4. Verfahren nach einem der vorhergehenden Ansprüche dadurch gekennzeichnet, daß zur Ermittlung der Formänderungsgröße das gefilterte Modulo-2Pi-Bild differenziert wird.

5. Verfahren nach einem der Ansprüche 1 bis 3 dadurch gekennzeichnet, daß zur Ermittlung der Formänderungsgröße die Differenz zwischen Maximum und Minimum in einem Bereich des gefilterten Modulo-2Pi-Bildes gebildet wird, der einem Bereich eines Umfangssegmentes des Prüfobjektes entspricht, dessen Breite wenigstens doppelt so groß ist wie die Versetzung der Teilstrahlen zueinander bezogen auf das Prüfobjekt.

6. Verfahren nach Anspruch 4 oder 5, dadurch gekennzeichnet, daß die ermittelte Formänderungsgröße mit einem Schwellwert verglichen wird und bei überschreiten des Schwellwertes eine Falschfarbendarstellung oder ein aufälliges Signal erzeugt wird.

7. Vorrichtung zur Durchführung des Verfahrens nach einem der Ansprüche 1 bis 6, mit
- einer Beleuchtungseinheit (10) zur Beleuchtung des rotationssymetrischen Prüfobjektes (16) mit kohärentem Licht,
- einem Zweistrahl-Interferometer (30) mit einer Phasenverschiebeeinrichtung (46) und einer Strahlversetzungseinrichtung (38) ,
- wenigstens einer die Ausgangsstrahlung des Zweistrahl-Interferometers (30) auf ein elektronisches Bildsensorsystem (54) abbildenden Komponente (52),
und
- einem Bildverarbeitungssystem, bestehend aus einem A/D-Wandler zur Digitalisierung der von dem Bildsensorsystem (54) abgegebenen Signale und einer Bildverarbeitungseinheit,
dadurch gekennzeichnet,
- daß die Beleuchtungseinheit (10) so ausgebildet ist, daß das rotationssymetrische Prüfobjekt (16) koaxial ringförmig mit kohärentem Licht beleuchtet wird.

8. Vorrichtung nach Anspruch 7, dadurch gekennzeichnet, daß die Beleuchtungseinrichtung (10) zur Erzeugung der ringförmigen Beleuchtung
- ein diffraktives Element,
- eine verspiegelte Kegelplatte oder
- ein Axikon (24)
umfasst.

9. Vorrichtung nach Anspruch 7 oder 8, dadurch gekennzeichnet, daß die Strahlversetzungseinrichtung von einem um die Mittelachse (14) des Prüfobjekts (16) oder senkrecht zu dieser Mittelachse (14) drehbaren Dachkantprisma (38) oder Dove-Prisma gebildet wird.

10. Vorrichtung nach Anspruch 7 oder 8, dadurch gekennzeichnet, daß die Strahlversetzungseinrichtung wenigstens eine vor einem Planspiegel angeordnete Keilplatte umfasst und um die Mittelachse (14) des Prüfobjekts (16) oder senkrecht zu dieser Mittelachse (14) drehbar ist.

11. Vorichtung nach einem der Ansprüche 7 bis 10, dadurch gekennzeichnet, daß die Beleuchtungseinrichtung (10) eine Einstelleinrichtung zur Veränderung der Breite der ringförmigen Beleuchtung umfasst.
